# EUROPÄISCHE PATENTSCHRIFT

(11) **EP 2 457 953 B1**
(45) Veröffentlichungstag und Bekanntmachung des Hinweises auf die Patenterteilung: **26.06.2013**
(21) Anmeldenummer: 11190686.3
(22) Anmeldetag: 25.11.2011
(51) Int. Cl.: C08L 83/04, C08K 3/04

(54) **Einkomponentige Organopolysiloxanmassen mit hoher relativer Permittivität**
One-component organopolysiloxane compositions with high relative permittivity
Compositions d'organopolysiloxanes à un composant ayant une permittivité relative élevée

(30) Priorität: 29.11.2010 DE 102010062139
(43) Veröffentlichungstag der Anmeldung: 30.05.2012
(73) Patentinhaber: Wacker Chemie AG, 81737 München (DE)
(72) Erfinder: Grunwald, Martin, 84547 Emmerting (DE); Miedl, Mathias, 84570 Polling (DE)
(74) Vertreter: Fritz, Helmut

(56) Entgegenhaltungen:
- WO-A1-02/24813
- DE-A1- 19 938 338

## Beschreibung

Die Erfindung betrifft Organopolysiloxanmassen, die mineralischen verstärkenden Füllstoff, Ruß und einen thermisch aktivierbaren Katalysator enthalten.

Die Herstellung von Kabelgarnituren aus elastomeren Kunststoffen erfolgt typischerweise in Formgebungsverfahren wie Spritzguss oder maschinellem Gießen oder über Extrusion. Ein gängiges Verfahren ist das Kaltschrumpfen der Kabelgarnituren auf die Kabelenden. Dazu müssen die Elastomere gute mechanische Eigenschaften aufweisen, wie hohe Reissdehnung, Reissfestigkeit und Weiterreisswiderstand.

Extrudierbare Siliconkautschuke, die diese Eigenschaften aufweisen, sind die in DE 19938338 beschriebenen einkomponentigen additionsvernetzenden Siliconmassen, welche durch Reaktion aliphatisch ungesättigter Gruppen mit Si-gebundenem Wasserstoff (Hydrosilylierung) in Gegenwart eines Katalysators, typischerweise einer Platin-Verbindung vernetzen.

Für den Abschluss und die Verbindung von Kabeln im Bereich der Mittel- und Hochspannung wird eine Feldsteuerung in den Garnituren benötigt. Diese Feldsteuerung kann beispielsweise als refraktive Feldsteuerung durch ein Material mit erhöhter. relativer Permittivität erreicht werden. Die erforderliche relative Permittivität wird mit den herkömmlichen Siliconkautschuken nicht erreicht.

Gegenstand der vorliegenden Erfindung sind zu Vulkanisaten mit einer relativen Permittivität εᵣ von mindestens 6, gemessen nach IEC 60250, härtbare Organopolysiloxanmassen (O) mit einer Anspringtemperatur von größer80°C, enthaltend
(A) 100 Gewichtsteile Verbindungen, die Reste mit aliphatischen Kohlenstoff-Kohlenstoff-Mehrfachbindungen aufweisen,
(B) 0,1 bis 50 Gewichtsteile Organopolysiloxane mit Si-gebundenen Wasserstoffatomen oder anstelle von (A) und (B)
(C) 100 Gewichtsteile Organopolysiloxane, die SiC-gebundene Reste mit aliphatischen Kohlenstoff-Kohlenstoff-Mehrfachbindungen und Si-gebundene Wasserstoffatome aufweisen,
(D) 10 bis 100 Gewichtsteile mineralischen verstärkenden Füllstoff, mit BET-Oberfläche von mindestens 50 m²/g nach DIN EN ISO 9277,
(E) 4 bis 300 Gewichtsteile Ruß mit einer BET-Oberfläche von 5 bis 1100 m²/g nach ASTM D 6556 und mit einer OAN von 10 bis 500 ml/100 g nach ASTM D 2414 und
(F) thermisch aktivierbaren Katalysator, der Verbindungen der Platinmetalle ausgewählt aus Pt, Pa, Rh und Ru enthält, in einer Menge, dass in den organopolysiloxanmassen (O) 0,0000001 bis 0,01 Gewichtsteile Platinmetall enthalten sind.

Die härtbaren Organopolysiloxanmassen (O) weisen als einkomponentige Formulierung lange Topfzeiten von mindestens 4 Wochen, insbesondere mindestens 6 Wochen bei 23°C und Umgebungsdruck auf. Vorzugsweise weisen die Organopolysiloxanmassen (O) Topfzeiten von mindestens 1 Woche, insbesondere mindestens 2 Wochen bei 50°C und Umgebungsdruck auf.

Die Organopolysiloxanmassen (O) vernetzen erst bei erhöhter Temperatur rasch zu Siliconkautschuken mit hoher relativer Permittivität bei geringem dielektrischem Verlustfaktor. Die Siliconkautschuke weisen gute mechanische Eigenschaften auf, insbesondere hohe Reissdehnung, Reissfestigkeit und Weiterreisswiderstand.

Die in den Organopolysiloxanmassen (O) eingesetzten Verbindungen (A) und (B) bzw. (C) werden bekanntermaßen so gewählt, daß eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den obengenannten Verhältnissen aufweist.

Vorzugsweise enthalten die Organopolysiloxanmassen (O) als Bestandteil (A) eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Block-copolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel I

RₐR¹_{b}^{SiO}(_{4-a-b})_{/2} eingesetzt, (I)

wobei
**R** einen von aliphatischen Kohlenstoff-Kohlenstoff-Mehrfachbindungen freien, organischen Rest,
**R¹** einen einwertigen, gegebenenfalls substituierten, SiC-gebundenen Kohlenwasserstoffrest mit aliphatischer Kohlenstoff-Kohlenstoff-Mehrfach-bindung,
**a** 0, 1, 2 oder 3 und
**b** 0, 1 oder 2 bedeuten,
mit der Maßgabe, daß die Summe **a** + **b** kleiner oder gleich 3 ist und im Durchschnitt mindestens 2 Reste **R¹** je Molekül vorliegen.

Bei Rest **R** kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der allgemeinen Formel (I) miteinander verbinden.

**R** umfaßt die einwertigen Reste -F, -Cl, -Br, -O**R⁶**, -CN, -SCN, -NCO und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß der allgemeinen Formel (I) Si-gebundene Reste.

**R⁶** kann Wasserstoffatom oder ein einwertiger gegebenenfalls substituierter Kohlenwasserstoffrest mit 1 bis 20 Kohlenstoffatomen, vorzugsweise Alkylreste und Arylreste bedeuten, wobei Wasserstoffatom, der Methyl- und der Ethylrest besonders bevorzugt sind.

Falls es sich bei Rest **R** um SiC-gebundene, substituierte Kohlenwasserstoffreste handelt, sind als Substituenten Halogenatome, phosphorhaltige Reste, Cyanoreste, -O**R⁶**, **-**N**R⁶**-,-N**R⁶**₂, -N**R⁶**-C(O)-N**R⁶**₂, -C(O)-N**R⁶**₂, -C(O)-**R⁶**, -C(O) O**R⁶**, -SO₂-Ph und -C₆F₅ mit **R⁶** gleich der obengenannten Bedeutung und **Ph** gleich Phenylrest bevorzugt.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecyl-rest, und Octadecylreste, wie der n-Octadecylrest, Cycloalkylreste, wie Cyclopentyl-, Cyclohexyl-, Cycloheptyl- und Methyl-cyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β -Phenylethylrest.

Beispiele für substituierte Reste **R** sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)ₙ-N(**R⁶**)C(O)N**R⁶**₂, -(CH₂)ₙ-C(O)N**R⁶**₂, -(CH₂)ₙ-C(O)**R⁶**, -(CH₂)ₙ -C(O)O**R⁶**, -(CH₂)ₙ - C(O) N**R⁶**₂, - (CH₂)ₙ -C(O) - (CH₂)ₘ-C(O)CH₃, -(CH₂)ₙ-N**R⁶-**(CH₂)ₘ-N**R⁶**₂, - (CH₂)ₙ -O-CO-**R⁶**, **-** (CH₂)ₙ-O-(CH₂)ₘ-CH(OH)-CH₂OH, - (CH₂)ₙ -(OCH₂CH₂)ₘ-O**R⁶**, -(CH₂)ₙ-SO₂-Ph und -(CH₂)ₙ-O-C₆F₅, wobei **R⁶** eine oben dafür angegebene Bedeutung hat, **n** und **m** gleiche oder verschiedene ganze Zahlen zwischen 0 und 10 sind und **Ph** den Phenylrest bezeichnet,

Beispiele für **R** gleich zweiwertige, beidseitig gemäß der allgemeinen Formel (I) Si-gebundene Reste sind solche, die sich von den voranstehend für Rest **R** genannten einwertigen Beispiele dadurch ableiten, dass eine zusätzliche Bindung durch Substitution eines Wasserstoffatoms erfolgt. Beispiele für derartige Reste sind -(CH₂)ₙ-, -CH(CH₃)-, -C(CH₃)₂-, -CH(CH₃)-(CH₂) -, -C₆H₄-, -CH(Ph)-CH₂-, -C(CF₃)₂-, -(CH₂)ₙ-C₆H₄-(CH₂)ₙ-, -(CH₂)ₙ-C₆H₄-C₆H₄-(CH₂)ₙ-, -(CH₂O)ₘ-, (CH₂CH₂O)ₘ-, -(CH₂)ₙ-Oₓ-C₆H₄-SO₂-C₆H₄-Oₓ-(CH₂)ₙ-, wobei x 0 oder 1 ist, m und n die voranstehend genannte Bedeutung haben sowie **Ph** gleich Phenylrest ist.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R¹** kann es sich um beliebige, einer Anlagerungsreaktion (Hydrosilylierung) mit einer SiHfunktionellen Verbindung zugängliche Gruppen handeln.

Falls es sich bei Rest **R¹** um SiC-gebundene, substituierte Kohlenwasserstoffreste handelt, sind als Substituenten Halogenatome, Cyanoreste und -OR⁶ bevorzugt, wobei **R⁶** die obengenannte Bedeutung hat.

Bevorzugt handelt es sich bei Rest **R¹** um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, bevorzugt von 10² bis 10⁶ g/mol. So kann es sich bei dem Bestandteil (A) beispielsweise um ein relativ niedermolekulares alkenylfunktionelles Oligosiloxan, wie 1,2-Divinyl-tetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel **R**₃SiO_{1/2}, **R¹R₂**SiO_{1/2}, **R¹R**SiO_{2/2} und **R₂**SiO_{2/2} zusammengesetzt, wobei **R** und **R¹** die vorstehend angegebene Bedeutung haben. Verzweigte und netzwerkartige Polysiloxane enthalten zusätzlich trifunktionelle und/oder tetrafunktionelle Einheiten, wobei solche der Formeln **R**SiO_{3/2}, **R¹**SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von mindestens 0,01 Pa's, bevorzugt mindestens 0,1 Pa_{'}s und höchstens 500 000 Pa_{'}s, bevorzugt höchstens 100 000 Pa_{'}s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der allgemeinen Formel II

R¹⁰_{c}H_{d}SiO(_{4-c-d})_{/2} (II)

eingesetzt, wobei
- **R¹⁰**: die Bedeutung von **R** hat,
- **c**: 0, 1, 2 oder 3 und
- **d**: 0, 1 oder 2 bedeuten,
mit der Maßgabe, daß die Summe von **c + d** kleiner oder gleich 3 ist und im Mittel mindestens zwei Si-gebundene Wasserstoffatome je Molekül vorliegen,

Vorzugsweise enthält das Organopolysiloxan (B) 0,04 bis 1,7 Gewichtsprozent Si-gebundenen Wasserstoff, bezogen auf das Gesamtgewicht des Organopolysiloxans (B).

Das Molekulargewicht des Bestandteils (B) kann ebenfalls in weiten Grenzen variieren, vorzugsweise von 10² bis 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formeln **R¹⁰**₃SiO_{1/2}, H**R¹⁰**₂SiO_{1/2}, H**R¹⁰**SiO_{2/2} und **R¹⁰**₂SiO_{2/2} zusammengesetzt. Verzweigte und netzwerkartige Polysiloxane enthalten zusätzlich trifunktionelle und/oder tetrafunktionelle Einheiten, wobei solche der Formeln **R¹⁰**SiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen gegebenenfalls zugleich auch aliphatisch ungesättigte Gruppen enthalten. Besonders bevorzugt ist die Verwendung niedermolekularer SiH-funktioneller Verbindungen, wie Tetrakis(dimethyl-siloxy)silan und Tetramethylcyclotetrasiloxan, sowie höhermolekularer, SiHhaltiger Siloxane, wie Poly(hydrogenmethyl)siloxan und Poly(dimethylhydrogenmethyl) siloxan mit einer Viskosität bei 25°C von 10 bis 10 000 mPa's, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den Organopolysiloxanmassen (O) enthalten, dass das Molverhältnis von SiH-Gruppen zu aliphatisch ungesättigten Gruppen bei 0,1 bis 20, besonders bevorzugt bei 1,0 bis 5,0, liegt.

Vorzugsweise enthalten die härtbaren Organopolysiloxanmassen (O) mindestens 0,5, insbesondere mindestens 1 Gewichtsteile und höchstens 20, insbesondere höchstens 10 Gewichtsteile Bestandteil (B).

Die Komponenten (A) und (B) sind handelsübliche Produkte bzw. nach in der Chemie gängigen Verfahren herstellbar.

Anstelle von Komponente (A) und (B) können die Organopolysiloxanmassen (O) Organopolysiloxane (C), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der allgemeinen Formeln

R¹¹gSiO_{4-g/2}, R¹¹ₕR¹²SiO_{3-h/2} und R¹¹ᵢHSiO_{3-i/2},

wobei **R¹¹** die Bedeutungen von **R** und **R¹²** die Bedeutungen von **R¹** haben,
- **g**: 0, 1, 2 oder 3,
- **h**: 0, 1 oder 2 und
- i: 0, 1 oder 2 bedeuten,
mit der Maßgabe, daß je Molekül mindestens 2 Reste **R¹²** und mindestens 2 Si-gebundene Wasserstoffatome vorliegen.

Beispiele für Organopolysiloxane (C) sind solche aus SiO_{4/2}-, R¹¹₃SiO_{1/2}-, R¹¹₂R¹²SiO_{1/2}- und R¹¹₂HSiO_{1/2}-Einheiten, sogenannte MQ-Harze, wobei diese Harze zusätzlich R¹¹SiO_{3/2}- und R¹¹₂SiO-Einheiten enthalten können, sowie lineare Organopolysiloxane im wesentlichen bestehend aus R¹¹₂R¹²SiO_{1/2}-R¹¹₂SiO- und R¹¹HSiO-Einheiten mit **R¹¹** und **R¹²** gleich der obengenannten Bedeutung.

Die Organopolysiloxane (C) besitzen vorzugsweise eine durchschnittliche Viskosität von mindestens 0,01 Pa_{'}s, bevorzugt mindestens 0,1 Pa_{'}s und höchstens 500 000 Pa_{'}s, bevorzugt höchstens 100 000 Pa_{'}s, jeweils bei 25°C.

Organopolysiloxane (C) sind nach in der Chemie gängigen Methoden herstellbar.

Beispiele für mineralische verstärkende Füllstoffe (D) sind pyrogene oder gefällte Kieselsäuren sowie Aluminiumoxid, wobei pyrogene und gefällte Kieselsäuren bevorzugt sind,

Die genannten Kieselsäurefüllstoffe können hydrophilen Charakter haben oder nach bekannten Verfahren hydrophobiert sein, Beim Einmischen hydrophiler Füllstoffe ist die Zugabe eines Hydrophobierungsmittels erforderlich.

Der mineralische verstärkende Füllstoff (D) weist vorzugsweise eine BET-Oberfläche von mindestens 80 m²/g, insbesondere mindestens 100 m²/g nach DIN EN ISO 9277 auf.

Vorzugsweise enthalten die härtbaren Organopolysiloxanmassen (O) mindestens 10, insbesondere mindestens 20 Gewichtsteile und höchstens 80, insbesondere höchstens 50 Gewichtsteile Füllstoff (D).

Der Ruß (E) kann ein Ruß oder ein Gemisch verschiedener Ruße sein. Der Ruß (E) weist vorzugsweise eine BET-Oberfläche von mindestens 7 m²/g und höchstens 1000 m²/g, besonders bevorzugt höchstens 950 m²/g nach ASTM D 6556 auf. Die OAN (Oil-Adsorption Number) als Maß der Struktur des Rußes (E) beträgt hinsichtlich der einzelnen Ruße vorzugsweise mindestens 20 ml/100 g, insbesondere mindestens 30 ml/100 g und höchstens 400 ml/100 g, besonders bevorzugt höchstens 200 ml/100 g, insbesondere höchstens 50 ml/100 g nach ASTM D 2414.

Vorzugsweise enthalten die härtbaren Organopolysiloxanmassen (0) mindestens 5, insbesondere mindestens 50 Gewichtsteile und höchstens 200, insbesondere höchstens 150 Gewichtsteile Ruß (E) .

Der thermisch aktivierbare Katalysator (F) enthält vorzugsweise eine Platinverbindung.

Vorzugsweise liegt die Anspringtemperatur bei mindestens 100°C, insbesondere mindestens 120°C und höchstens 170°C, insbesondere höchstens 150 °C. Die Anspringtemperatur der Organopolysiloxanmassen (O) wird mit einem Göttfert Elastographen gemessen und ermittelt sich aus einer Heizrate von 10°C/min. Dabei wird die Temperatur, die dem 4%-Wert des maximalen Drehmomentes entspricht, als Anspringtemperatur definiert.

Vorzugsweise werden Katalysatoren (F) eingesetzt, die beschrieben sind in DE 19938338 A1, Seite 1 Zeile 51 bis Seite 4, Zeile 24 und Seite 6, Zeile 19 bis Seite 7, und in DE 102007047212 A1, Absätze [0042] bis [0053].

Bei dem Katalysator (F) handelt es sich bevorzugt um Bis (alkinyl) (1,5-cyclooctadien) -platin-, Bis (alkinyl) (bicyclo [2.2.1] hepta-2,5-dien) platin-, Bis (alkinyl) (1,5 -dimethyl-1,5 -cyclooctadien) platin- und Bis (alkinyl) (1,6-dimethyl-1,5-cyclooctadien) platin-Komplexe und um Verbindungen der allgemeinen Formel (V)

R⁷₂Pt [P (OR⁸) ₃]₂ (V) ,

wobei
- **R⁷**: Halogen, einfach negativer anorganischer Rest, C**R⁹**₃, O**R⁹**, oder Si**R⁹**₃,
- **R⁸**: Alkyl der Formeln CₙH₂ₙ₊₁ mit n = 5 - 18 oder CₘH₂ₘ₋₁ mit m = 5 - 31, Arylalkyl der Formel -(C₆H₅₋ₚ)-(CₒH₂ₒ₊₁)ₚ mit o = 1 - 31 und p = 1 - 5,
- **R⁹**: H, lineare oder verzweigte aliphatische Reste mit 1 bis 18 Kohlenstoffatomen oder Arylalkylreste mit 6 bis 31 Kohlenstoffatomen bedeuten,
wobei die Wasserstoffatome der Reste **R⁷** und **R⁸** substituiert oder nicht substituiert sind durch die Gruppen -NH₂, -COOH, -F, -Br, -Cl, -Aryl oder -Alkyl.

Bevorzugt sind als Reste **R⁷** Halogene, Pseudohalogene und Alkylreste, Bevorzugt sind als Reste **R⁸** Alkylreste.

Vorzugsweise ist in den Organopolysiloxanmassen (O) Katalysator (F), in einer Menge enthalten, dass darin mindestens 0,000005, insbesondere mindestens 0,000001 Gewichtsteile und höchstens 0,0001 Gewichtsteile Platinmetall enthalten sind. Die Menge des Katalysators (F) richtet sich nach der gewünschten Vernetzungsgeschwindigkeit und der jeweiligen Verwendung sowie ökonomischen Gesichtspunkten. Die Organopolysiloxanmassen (O) enthalten Katalysatoren (F) bevorzugt in solchen Mengen, daß ein Platinmetallgehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Organopolysiloxanmassen (O), resultiert.

Außer den Komponenten (A) bis (F) können die Organopolysiloxanmassen (O) noch alle weiteren Stoffe enthalten, die auch bisher zur Herstellung von additionsvernetzbaren Massen eingesetzt wurden.

Die Organopolysiloxanmasse (O) kann wahlweise als Bestandteil (G) weitere Zusätze zu einem Anteil von bis zu 70 Gew, -%, vorzugsweise 0,0001 bis 40 Gew.-%, enthalten. Diese Zusätze können z.B. inaktive Füllstoffe, harzartige Organopolysiloxane, die von den Organopolysiloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe und Pigmente.

Enthalten sein können des weiteren Zusätze (H), die der gezielten Einstellung der Verarbeitungszeit, Anspringtemperatur und Vernetzungsgeschwindigkeit der Organopolysiloxanmasse (O) dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleat, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (H) hängt von ihrer chemischen Struktur ab, so daß sie individuell bestimmt werden muß.

Der Inhibitorgehalt der Organopolysiloxanmasse (O) beträgt vorzugsweise 0 bis 50 000 ppm, besonders bevorzugt 20 bis 2000 ppm, insbesondere 100 bis 1000 ppm.

Die Organopolysiloxanmassen (O) können, falls erforderlich, in Flüssigkeiten gelöst, dispergiert, suspendiert oder emulgiert werden. Die Organopolysiloxanmassen (O) können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann, Insbesondere können die Organopolysiloxanmassen (O), falls sie hochviskos sind, in Form eines Granulates zubereitet werden. Hinsichtlich der elastomeren Eigenschaften der vernetzten Organopolysiloxanmasse (O) wird gleichfalls das gesamte Spektrum umfaßt, beginnend bei extrem weichen Silicongelen, über gummiartige Materialien bis hin zu hochvernetzten Siliconen mit glasartigem Verhalten.

Die Herstellung der Organopolysiloxanmassen (O) kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung der Komponenten (A) bis (E), und die Zugabe des Katalysators (F) zu dieser Mischung. Der Katalysator (F) kann dabei als Festsubstanz oder als Lösung - in einem geeigneten Lösungsmittel gelöst - oder als sog, Batch - gleichmäßig mit einer geringen Menge (A) oder (A) mit (G) vermischt - eingearbeitet werden.

Die Vermischung erfolgt dabei abhängig von der Viskosität von (A) z.B. mit einem Rührer, in einem Disolver, auf einer Walze oder in einem Kneter. Der Katalysator (F) kann auch in einem organischen Thermoplasten bzw, thermoplastischen Siliconharz verkapselt werden.

Bei den eingesetzten Komponenten (A) bis (H) kann es sich jeweils um eine einzelne Art einer solchen Komponente, wie auch um ein Gemisch aus mindestens zwei verschiedenen Arten einer solchen Komponente handeln.

Die Organopolysiloxanmassen (O) können unter den gleichen Bedingungen vernetzt werden, wie die bisher bekannten durch Hydrosilylierungsreaktion vernetzbaren Massen.

Ein weiterer Gegenstand der vorliegenden Erfindung sind Formkörper hergestellt durch Vernetzung der Organopolysiloxanmassen (O).

Die Permittivität des Vulkanisats der Organopolysiloxanmassen (O) beträgt vorzugsweise mindestens 7, insbesondere mindestens 8, jeweils gemessen nach IEC 60250.

Der spezifische Volumenwiderstand des Vulkanisats beträgt vorzugsweise mindestens 10¹⁰ Ω cm, besonders bevorzugt mindestens 10¹² Ω cm, insbesondere mindestens 10¹⁴ Ω cm, jeweils gemessen nach IEC 60093.

Der dielektrische Verlustfaktor des Vulkanisats beträgt vorzugsweise höchstens tan δ 0,5, besonders bevorzugt höchstens tan δ 0,15, insbesondere höchstens tan δ 0,08, jeweils gemessen nach IEC 60250.

Die Organopolysiloxanmassen (O) sowie die daraus hergestellten Vernetzungsprodukte können für alle Zwecke eingesetzt werden, für die auch bisher zu Elastomeren vernetzbare Organopolysiloxanmassen bzw. Elastomere verwendet wurden. Dies umfaßt beispielsweise die Siliconbeschichtung bzw. Imprägnierung beliebiger Substrate, die Herstellung von Formteilen, z.B. im Spritzgußverfahren, Vakuumextrusionsverfahren, Extrusionsverfahren, Formgießen und Formpressen, Abformungen, die Verwendung als Dicht-, Einbett- und Vergußmassen. Bevorzugt werden die Organopolysiloxanmassen (O) für Formteile für die Feldsteuerung von Kabelgarnituren eingesetzt.

Alle vorstehenden Symbole der vorstehenden Formeln weisen ihre Bedeutungen jeweils unabhängig voneinander auf. In allen Formeln ist das Siliciumatom vierwertig.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. COD bedeutet Cycloocta-1,5-dien.

Die relativen Permittivitäten wurden gemessen nach IEC 60250.

Der Dielektrische Verlustfaktor wurde gemessen nach IEC 60250

Die BET-Oberflächen des Rußes beziehen sich auf ASTM D 6556. Die BET-Oberflächen der Kieselsäure beziehen sich auf DIN EN ISO 9277.

Die OAN beziehen sich auf ASTM D 2414.

Die Härte Shore A wurde gemessen nach ISO 868

Die Reißdehnung wurde gemessen nach ISO 37

Die Reißfestigkeit wurde gemessen nach ISO 37

Der Weiterreissfestigkeit wurde gemessen nach ASTM D 624 B

Der spezifische Volumenwiderstand wurde bestimmt gemäß IEC 60093.

Die angegebene Lagerstabilität gibt die Zeitdauer bis zur Verdopplung der Viskosität der Masse an.

### Beispiel 1:

### Herstellung Vormischung A:

In einen Kneter wurden 33 Teile eines vinyldimethylsiloxy-terminierten Polydimethylsiloxans mit einem Molekulargewicht von ca. 500 000 g/mol mit 0,5 Teilen Wasser, 1,3 Teilen Hexamethyldisilazan und 7 Teilen einer pyrogenen Kieselsäure mit einer spezifischen Oberfläche von 150 m²/g versetzt und homogen vermischt. Anschließend wurde das Gemisch auf 150°C erwärmt. Nach 90 Minuten Wartezeit wurden 0,5 Teile eines endständig OH-funktionellen Siloxans zugegeben und nach weiteren 20 Minuten mit 4 Teilen einer pyrogenen Kieselsäure mit einer Oberfläche von 200 m²/g versetzt. Nach einer Wartezeit von 90 Minuten wurde die Knetertemperatur wieder auf 25°C abgesenkt.

Zu 44 Teilen der Vormischung A wurden in einem Kneter 35 Teile Ruß mit einer BET Oberfläche nach ASTM D 6556 von 7 bis 12 m²/g und einer OAN nach ASTM D 2414 von 35 bis 40 ml/100 g, 20 Teile eines vinyldimethylsiloxy-terminierten Polydimethylsiloxans mit einem Molekulargewicht von ca. 500 000 g/mol und als SiH-Vernetzer 1,2 Teile eines Mischpolymerisat aus Dimethylsiloxy- und Methylhydrogensiloxy- und Trimethylsiloxy-Einheiten mit einer Viskosität von 300 - 500 mPa's bei 25°C und einem Gehalt an Si-gebundenem Wasserstoff von 0,46 Gew.-% zugegeben und vermischt.

Dazu wurden auf einer Walze 2 Teile eines Katalysatorbatches, der 940 ppm eines Platinkomplexes der nachfolgenden Formel:

[(COD) Pt (p-C≡C-C₆H₄-SiMe₃)₂]

enthält und 2 Teile eines Inhibitorbatches von 10% Ethinylcyclohexanol gelöst in einem vinyldimethylsiloxyterminierten Polydimethylsiloxan zugegeben.

### Beispiel 2:

Anstelle des Katalysators aus Beispiel 1 wurden als Katalysator 1 Teil eines Katalysatorbatches, der 500 ppm (PtCl₂[(P(O-2-tert-butylphenyl) ₃]₂ enthielt und als Inhibitor 0,1 Teile des im Beispiel 1 beschriebenen Inhibitorbatches eingesetzt.

### Beispiel 3:

### Herstellung Vormischung B:

Zu 69 Teilen der Vormischung A wurden in einem Kneter 10 Teile eines Rußes mit einer BET Oberfläche von 910 m²/g und einer OAN von 380 ml/100 g gegeben und 20 Teile eines vinyldimethylsiloxy-terminierten Polydimethylsiloxans mit einem Molekulargewicht von ca. 500 000 g/mol und als SiH-vernetzer 1,2 Teile eines Mischpolymerisat aus Dimethylsiloxy- und Methylhydrogensiloxy- und Trimethylsiloxy-Einheiten mit einer Viskosität von 300 - 500 mPa's bei 25°C und einem Gehalt an Si-gebundenem Wasserstoff von 0,46 Gew.-% zugegeben und vermischt.

30 Teile der Vormischung B wurden nun mit 68 Teile einer Mischung bestehend aus 100 Teilen Vormischung A, 1,1 Teilen des in Beispiel 1 beschriebenen Si-H Vernetzers und 0,35 Teilen des in Beispiel 1 beschriebenen Inhibitorbatches vermischt und anschließend auf einer Walze mit 2 Teilen des in Beispiel 1 beschriebenen Katalysatorbatches und 1 Teil des in Beispiel 1 beschriebenen Inhibitorbatches versetzt.

### Eigenschaften:

### Beispiel 1:

Relative Permittivität εᵣ: 10
Dielektrischer Verlustfaktor tan δ: 0,05
Spezifischer Volumenwiderstand: 1,10 x 10¹⁵ Ω cm
Härte Shore A: 36
Reißdehnung: 600%
Reißfestigkeit: 5 MPa
Weiterreissfestigkeit: 25 N/mm
Lagerstabilität bei 50°C: > 2 Wochen
Anspringtemperatur nach 2 Wochen Lagerung bei 50 °C: 130°C

### Beispiel 2:

Mechanische und elektrische Eigenschaften wie Beispiel 1
Lagerstabilität bei 50°C: > 2 Wochen
Anspringtemperatur nach 2 Wochen Lagerung bei 50°C: 140°C

### Beispiel 3:

Relative Permittivität εᵣ: 9
Dielektrischer Verlustfaktor tan δ: 0,03
Spezifischer Volumenwiderstand: 1,04 x 10¹⁵ Ω cm
Härte Shore A: 35
Reißdehnung: 690%
Reißfestigkeit: 5 MPa
Weiterreissfestigkeit: 25 N/mm

## Patentansprüche

1. Zu Vulkanisaten mit einer relativen Permittivität εᵣ von mindestens 6, gemessen nach IEC 60250, härtbare Organopolysiloxanmassen (O), mit einer Anspringtemperatur von größer 80°C, enthaltend
(A) 100 Gewichtsteile Verbindungen, die Reste mit aliphatischen Kohlenstoff-Kohlenstoff-Mehrfachbindungen aufweisen,
(B) 0,1 bis 50 Gewichtsteile Organopolysiloxane mit Sigebundenen Wasserstoffatomen oder anstelle von (A) und (B)
(C) 100 Gewichtsteile Organopolysiloxane, die SiC-gebundene Reste mit aliphatischen Kohlenstoff-Kohlenstoff-Mehrfachbindungen und Si-gebundene Wasserstoffatome aufweisen,
(D) 10 bis 100 Gewichtsteile mineralischen verstärkenden Füllstoff, mit BET-Oberfläche von mindestens 50 m²/g nach DIN EN ISO 9277,
(E) 4 bis 300 Gewichtsteile Ruß mit einer BET-Oberfläche von 5 bis 1100 m²/g nach ASTM D 6556 und mit einer OAN von 10 bis 500 ml/100 g nach ASTM D 2414 und
(F) thermisch aktivierbaren Katalysator, der Verbindungen der Platinmetalle ausgewählt aus Pt, Pa, Rh und Ru enthält, in einer Menge, dass in den organopolysiloxanmassen (O) 0,0000001 bis 0,01 Gewichtsteile Platinmetall enthalten sind.

2. Härtbare Organopolysiloxanmassen (O) nach Anspruch 1, bei denen die aliphatisch ungesättigte Organosiliciumverbindung (A), Organopolysiloxane aus Einheiten der allgemeinen Formel I
RₐR¹_{b}SiO_{(4-a-b)/2} (I)
sind, wobei
**R** einen von aliphatischen Kohlenstoff-Kohlenstoff-Mehrfachbindungen freien, organischen Rest,
**R¹** einen einwertigen, gegebenenfalls substituierten, SiCgebundenen Kohlenwasserstoffrest mit aliphatischer Kohlenstoff-Kohlenstoff-Mehrfach-bindung,
**a** 0, 1, 2 oder 3 und
**b** 0, 1 oder 2 bedeuten,
mit der Maßgabe, daß die Summe **a + b** kleiner oder gleich 3 ist und im Durchschnitt mindestens 2 Reste **R¹** je Molekül vorliegen.

3. Härtbare Organopolysiloxanmassen (O) nach Anspruch 1 oder 2, bei denen die Organopolysiloxane (B), Organopolysiloxane aus Einheiten der allgemeinen Formel II
R¹⁰_{c}H_{d}SiO_{(4-c-d)/2} (II)
sind, wobei
**R¹⁰** die Bedeutung von **R** hat,
**c** 0, 1, 2 oder 3 und
**d** 0, 1 oder 2 bedeuten,
mit der Maßgabe, daß die Summe von **c + d** kleiner oder gleich 3 ist und im Mittel mindestens zwei Si-gebundene Wasserstoffatome je Molekül vorliegen.

4. Härtbare Organopolysiloxanmassen (O) nach Anspruch 1 bis 3, bei denen die mineralischen verstärkenden Füllstoffe (D) ausgewählt werden aus pyrogenen oder gefällten Kieselsäuren und Aluminiumoxid.

5. Härtbare Organopolysiloxanmassen (O) nach Anspruch 1 bis 4, bei denen die OAN des Rußes (E) mindestens 20 ml/100 g, nach ASTM D 2414 beträgt.

6. Härtbare Organopolysiloxanmassen (O) nach Anspruch 1 bis 5, bei denen der Katalysator (F) eine Platinverbindung enthält.

7. Härtbare Organopolysiloxanmassen (O) nach Anspruch 1 bis 6, bei denen der dielektrische Verlustfaktor tan δ des Vulkanisats höchstens 0,15 nach IEC 60250 beträgt.

## Claims

1. Organopolysiloxane compositions (O) which are curable to vulcanizates having a relative permittivity εᵣ of at least 6, measured to IEC 60250, and have an onset temperature greater than 80°C, comprising
(A) 100 parts by weight of compounds having radicals with aliphatic carbon-carbon multiple bonds,
(B) 0.1 to 50 parts by weight of organopolysiloxanes with Si-bonded hydrogen atoms or, instead of (A) and (B),
(C) 100 parts by weight of organopolysiloxanes having SiC-bonded radicals with aliphatic carbon-carbon multiple bonds and Si-bonded hydrogen atoms,
(D) 10 to 100 parts by weight of mineral reinforcing filler with a BET surface area of at least 50 m²/g to DIN EN ISO 9277,
(E) 4 to 300 parts by weight of carbon black with a BET surface area of 5 to 1100 m²/g to ASTM D 6556 and with an OAN of 10 to 500 ml/100 g to ASTM D 2414 and
(F) thermally activatable catalyst containing compounds of the platinum metals selected from Pt, Pa, Rh and Ru, in such an amount that 0.0000001 to 0.01 part by weight of platinum metal is present in the organopolysiloxane compositions (O).

2. Curable organopolysiloxane compositions (O) according to Claim 1, in which the aliphatically unsaturated organosilicon compounds (A) are organopolysiloxanes formed from units of the general formula I
RₐR¹_{b}SiO_{(4-a-b)/2} (I)
where
**R** is an organic radical free of aliphatic carbon-carbon multiple bonds,
**R¹** is a monovalent, optionally substituted SiC-bonded hydrocarbyl radical with an aliphatic carbon-carbon multiple bond,
**a** is 0, 1, 2 or 3 and
**b** is 0, 1 or 2,
with the proviso that the sum of **a + b** is less than or equal to 3 and an average of at least 2 R¹ radicals are present per molecule.

3. Curable organopolysiloxane compositions (O) according to Claim 1 or 2, in which the organopolysiloxanes (B) are organopolysiloxanes formed from units of the general formula II
R^{1o}_{c}H_{d}SiO_{(4-c-d)/2} (II)
where
**R¹⁰** is as defined for **R**,
**c** is 0, 1, 2 or 3 and
**d** is 0, 1 or 2,
with the proviso that the sum of **c + d** is less than or equal to 3 and an average of at least two Si-bonded hydrogen atoms are present per molecule.

4. Curable organopolysiloxane compositions (O) according to Claims 1 to 3, in which the mineral reinforcing fillers (D) are selected from fumed or precipitated silicas and alumina.

5. Curable organopolysiloxane compositions (O) according to Claims 1 to 4, in which the OAN of the carbon black (E) is at least 20 ml/100 g to ASTM D 2414.

6. Curable organopolysiloxane compositions (O) according to Claims 1 to 5, in which the catalyst (F) comprises a platinum compound.

7. Curable organopolysiloxane compositions (O) according to Claims 1 to 6, in which the dielectric loss factor tan δ of the vulcanizate is at most 0.15 to IEC 60250.

## Revendications

1. Masses d'organopolysiloxanes (O) durcissables en produits vulcanisés présentant une permittivité relative εᵣ d'au moins 6, mesurée selon la norme IEC 60250, présentant une température de démarrage supérieure à 80°C, contenant
(A) 100 parties en poids de composés qui présentent des radicaux dotés de liaisons carbone-carbone aliphatiques multiples,
(B) 0,1 à 50 parties en poids d'organopolysiloxanes présentant des atomes d'hydrogène liés par Si ou, au lieu de (A) et (B)
(C) 100 parties en poids d'organopolysiloxanes qui présentent des radicaux liés par Si, dotés de liaisons carbone-carbone aliphatiques multiples et des atomes d'hydrogène liés par Si,
(D) 10 à 100 parties en poids de charge renforçante minérale, présentant une surface BET d'au moins 50 m²/g selon la norme DIN EN ISO 9277,
(E) 4 à 300 parties en poids de suie présentant une surface BET de 5 à 1100 m²/g selon la norme ASTM D 6556 et un OAN (indice d'absorption d'huile) de 10 à 500 ml/100 g selon la norme ASTM D 2414 et
(F) un catalyseur thermoactivable, qui contient des composés des métaux du platine, choisis parmi Pt, Pa, Rh et Ru, en une quantité telle que les masses d'organopolysiloxanes (O) contiennent 0,0000001 à 0,01 partie en poids de métal du platine.

2. Masses d'organopolysiloxanes (O) durcissables selon la revendication 1, dans lesquelles les composés organosiliciés aliphatiquement insaturés (A) sont des organopolysiloxanes constitués d'unités de formule générale I
RₐR¹_{b}SiO_{(4-a-b)/2} (I)
où
R signifie un radical organique exempt de liaisons carbone-carbone aliphatiques multiples,
R¹ signifie un radical hydrocarboné monovalent, le cas échéant substitué, lié par SiC, présentant une liaison carbone-carbone aliphatique multiple,
a vaut 0, 1, 2 ou 3 et
b vaut 0, 1 ou 2,
à condition que la somme de a + b soit inférieure ou égale à 3 et qu'il existe en moyenne au moins 2 radicaux R¹ par molécule.

3. Masses d'organopolysiloxanes (O) durcissables selon la revendication 1 ou 2, dans lesquelles les organopolysiloxanes (B) sont des organopolysiloxanes constitués d'unités de formule générale II
R¹⁰_{c}H_{d}SiO_{(4-c-d)/2} (II)
où
R¹⁰ présente la signification de R,
c vaut 0, 1, 2 ou 3 et
d vaut 0, 1 ou 2,
à condition que la somme de c + d soit inférieure ou égale à 3 et qu'il existe en moyenne au moins 2 atomes d'hydrogène liés par Si par molécule.

4. Masses d'organopolysiloxanes (O) durcissables selon les revendications 1 à 3, dans lesquelles les charges renforçantes minérales (D) sont choisies parmi les silices pyrogènes ou précipitées et l'oxyde d'aluminium.

5. Masses d'organopolysiloxanes (O) durcissables selon les revendications 1 à 4, dans lesquelles l'OAN de la suie (E) vaut au moins 20 ml/100 g selon la norme ASTM D 2414.

6. Masses d'organopolysiloxanes (O) durcissables selon les revendications 1 à 5, dans lesquelles le catalyseur (F) contient un composé du platine.

7. Masses d'organopolysiloxanes (O) durcissables selon les revendications 1 à 6, dans lesquelles le facteur de perte diélectrique tan δ du produit vulcanisé vaut au plus 0,15 selon la norme IEC 60250.
